# EUROPÄISCHE PATENTSCHRIFT

(11) **EP 3 551 503 B1**
(45) Veröffentlichungstag und Bekanntmachung des Hinweises auf die Patenterteilung: **14.10.2020**
(21) Anmeldenummer: 17808501.5
(22) Anmeldetag: 05.12.2017
(51) Int. Cl.: B60R 13/08, B29C 44/04

(54) **GEDRUCKTES DÄMMELEMENT**
PRINTED INSULATING ELEMENT
ÉLÉMENT ISOLANT IMPRIMÉ

(30) Priorität: 09.12.2016 EP 16203278
(43) Veröffentlichungstag der Anmeldung: 16.10.2019
(73) Patentinhaber: Sika Technology AG, 6340 Baar (CH)
(72) Erfinder: BELPAIRE, Vincent, 1180 Uccle (BE)
(74) Vertreter: Sika Patent Attorneys
(86) Internationale Anmeldenummer: PCT/EP2017/081586
(87) Internationale Veröffentlichungsnummer: WO 2018/104343

(56) Entgegenhaltungen:
- WO-A1-99/37506
- WO-A1-2009/021537

## Beschreibung

Die Erfindung betrifft ein Dämmelement mit einem Trägerelement und einem expandierbaren Element, insbesondere zur Dämmung eines Strukturelementes mit einem Hohlraum in einem Fahrzeug. Sie betrifft des Weiteren ein System mit einem Strukturelement und einem darin angeordneten Dämmelement, sowie ein Verfahren zur Herstellung eines Dämmelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

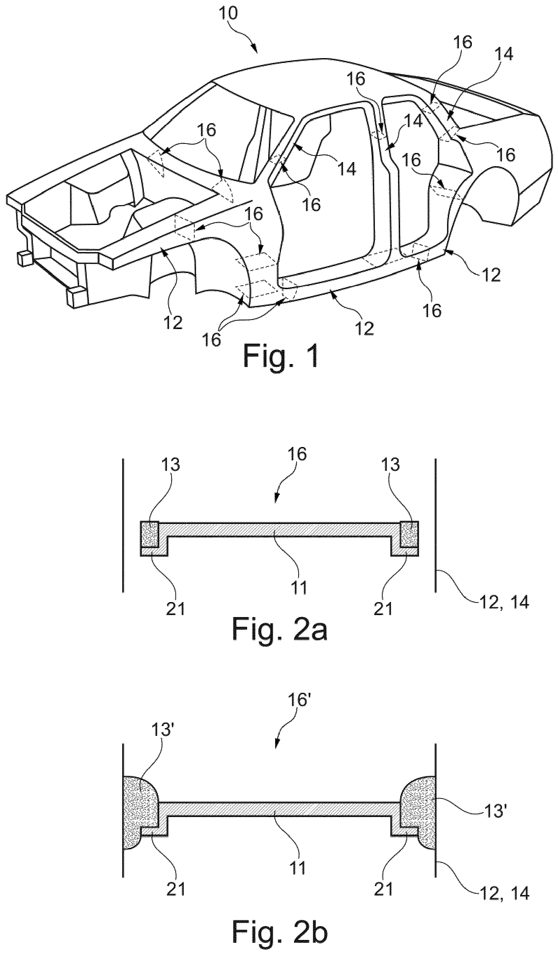

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a ein Dämmelement 16 vor einer Expansion eines expandierbaren Materials 13. Fig. 2b zeigt dasselbe Dämmelement 16, jedoch nach einer Expansion des expandierbaren Materials 13, also mit dem expandierten Material 13'.

Das Dämmelement 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Das Dämmelement 16 umfasst ein Trägerelement 11, welches einen Randbereich 21 hat. Das expandierbare Material 13 ist dabei im Wesentlichen auf diesem Randbereich 21 des Trägerelementes 11 angeordnet.

Vor der Expansion des expandierbaren Materials 13 besteht zwischen dem Dämmelement 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen dem Dämmelement 16 und dem Strukturelement 12, 14 schliesst. Zudem wird durch die Expansion des expandierbaren Materials 13 auch zugleich eine Fixierung des Dämmelementes 16' im Strukturelement 12, 14 erreicht. Ein derart im Strukturelement 12, 14 befestigtes Dämmelement 16' verstärkt einerseits das Strukturelement 12, 14 und verschliesst andererseits den Hohlraum im Strukturelement 12, 14.

Nachteilig an solchen Dämmelementen 16 ist es, dass zur Herstellung solcher Dämmelemente 16 grosse Investitionen in entsprechende Werkzeuge notwendig sind.

Dies ist deshalb so, weil herkömmliche Dämmelemente 16 üblicherweise durch ein Spritzgussverfahren, beispielsweise ein Einkomponenten- oder Zweikomponenten-Spritzgussverfahren, hergestellt werden. Zur Herstellung von grossen Stückzahlen ist dieses herkömmliche Spritzgussverfahren wirtschaftlich sinnvoll, weil die hohen Investitionskosten in Werkzeuge kompensiert werden durch sehr niedrige Produktionskosten eines einzelnen Dämmelementes. Zur Herstellung von kleineren Serien verschiebt sich dieses Verhältnis jedoch derart, dass die niedrigen Produktionskosten des einzelnen Dämmelementes die hohen Investitionskosten in Werkzeuge nicht aufwiegen können.

Um dieses Problem zu umgehen, wurden bereits alternative Herstellungsmethoden, wie beispielsweise die Profilextrusion oder ein mehrschichtiges stanzendes Verfahren, vorgeschlagen. Solche alternativen Technologien benötigen zwar keine sehr hohen Investitionskosten in Werkzeuge, sind jedoch limitiert im Hinblick auf die Geometrie des Dämmelementes. Da jedoch die Hohlräume in Fahrzeugen häufig komplexe Formen aufweisen, ist es notwendig, entsprechende komplexe Formen eines Dämmelementes herstellen zu können.

Ein weiteres alternatives Verfahren ist beispielsweise in WO 2014/108857 A1 beschrieben. Hier wird das expandierbare Material auf ein Substrat extrudiert. Dies erlaubt es, individuelle Formen für Kleinserien von expandierbarem Material herzustellen. Jedoch ist es mit dieser Methode nicht möglich, ein Dämmelement auf effiziente Weise herzustellen, weil ein Träger für das expandierbare Material jeweils separat hergestellt und dem System zugeführt werden muss. In WO 99/37506 A1 wird ein Dämmelement offenbart das durch ein Spritzgussverfahren hergestellt wird.

Der Erfindung liegt daher die Aufgabe zugrunde, ein Dämmelement sowie ein Verfahren zur Herstellung eines Dämmelementes der oben erläuterten Art bereitzustellen, welches ohne hohe Investitionskosten in Werkzeuge hergestellt werden kann, und welches erlaubt, auch komplexere dreidimensionale Formen des Dämmelementes zu ermöglichen. Weiterhin soll das Dämmelement bzw. das Verfahren zur Herstellung eines Dämmelementes auf kostengünstige Art und Weise produziert werden können, um auch Serien mit höherer Stückzahl wirtschaftlich effizient produzieren zu können.

Diese Aufgabe wird zunächst gelöst durch ein Dämmelement zur Dämmung eines Strukturelementes in einem Fahrzeug, wobei das Dämmelement zunächst ein Trägerelement umfasst. Das Trägerelement besteht aus zumindest einem gedruckten Materialstrang eines ersten Materials, wobei das erste Material zumindest bis zu einer Temperatur zwischen 120° C und 200° C in einem festen Aggregatzustand ist. Weiterhin umfasst das Dämmelement ein expandierbares Element bestehend aus zumindest einem gedruckten Materialstrang eines zweiten Materials, wobei das zweite Material bei einer Temperatur zwischen 120° C und 200° C expandierbar ist. Dabei hat das Dämmelement an einer dicksten Stelle, gemessen senkrecht zu einer Ebene des Dämmelementes, mindestens zwei und höchstens zehn übereinanderliegende Schichten.

Diese Lösung hat den Vorteil, dass durch das Verwenden einer begrenzten Anzahl an übereinanderliegenden Schichten ein sehr effizientes Herstellungsverfahren zur Verfügung gestellt werden kann. Je mehr übereinanderliegende Schichten gedruckt werden müssen, desto länger dauert in der Regel die Herstellung eines Elementes, was höhere Produktionskosten zur Folge hat. Somit reduziert eine Beschränkung der Anzahl übereinanderliegender Schichten den Zeitaufwand und auch den Kostenaufwand zur Herstellung eines solchen gedruckten Dämmelementes.

Ein Kerngedanke der vorliegenden Erfindung besteht darin, dass eine Oberfläche sowohl des Trägerelementes wie auch des expandierbaren Elementes für diesen Anwendungszweck nicht zwingenderweise feingliedrig gestaltet sein muss. Das expandierbare Element verändert seine Form bei der Expansion unter Hitzeanwendung, so dass eine ursprüngliche äussere Form für dessen Funktion nicht von zentraler Bedeutung ist.

Beim Trägerelement wiederum besteht die Funktion insbesondere in der Positionierung des expandierbaren Elementes in einem Strukturelement, sowie auch zur Strukturverstärkung des Gesamtsystems. Beide diese Funktionen können auch mit Trägerelementen sichergestellt werden, welche aus grösseren Bausteinen, insbesondere dickeren Materialsträngen, aufgebaut sind. Somit erweist sich das Verwenden von grösser dimensionierten Materialsträngen zur Herstellung von gedruckten Dämmelementen als besonders vorteilhaft, weil dadurch ein deutlich effizienterer Herstellungsprozess realisierbar ist. Die Nachteile einer gröber gegliederten Oberfläche, wie beispielsweise höhere Fertigungstoleranzen, sind in diesem Anwendungsbereich oftmals bis zu einem gewissen Grad hinnehmbar.

Die Bezeichnung "Dämmelement" umfasst im Zusammenhang mit dieser Erfindung Elemente zur Abschottung und/oder Verstärkung und/oder Dämmung eines Strukturelementes, also insbesondere sowohl die in der Fachsprache genannte "Baffle" als auch die in der Fachsprache genannten "Reinforcer". Die verschiedenen Eigenschaften eines solchen Dämmelementes können dabei einzeln oder aber in Kombination miteinander auftreten.

Die Bezeichnung "drucken" bzw. "gedruckt" umfasst im Zusammenhang mit dieser Erfindung insbesondere ein Verfahren bzw. dessen Resultat, welches im Allgemeinen als dreidimensionaler Druck bekannt ist. Dabei werden Materialstränge eines Materials auf ein Auflageelement abgelegt bzw. aufbauend übereinandergelegt. Die Materialstränge sind dabei beispielsweise derart gebildet, dass sie sich nach einem Aneinander- und/oder Übereinanderlegen miteinander verbinden, und ihren ursprünglichen Querschnitt beim Druckvorgang im Wesentlichen beibehalten.

Die Bezeichnung "Materialstrang" umfasst im Zusammenhang mit dieser Erfindung dasjenige Element, welches beim Drucken auf ein Auflageelement bzw. auf einen bereits gedruckten Materialstrang gelegt wird. Die Materialstränge können dabei aus unterschiedlichen Materialien und mit unterschiedlichen Querschnitten gestaltet sein.

Die Bezeichnung "Schicht" umfasst im Zusammenhang mit dieser Erfindung Materialstränge, welche auf ein gemeinsames Auflageelement gedruckt werden. Bei einem ebenen Auflageelement liegen somit die Materialstränge einer Schicht alle in einer gemeinsamen Ebene. Bei einem nicht-ebenen Auflageelement liegen die Materialstränge einer Schicht nicht in einer gemeinsamen Ebene, sondern bilden im Wesentlichen eine Topographie des nicht-ebenen Auflageelementes nach. Auflageelemente können dabei einmalig verwendbare oder mehrfach wiederverwendbare Elemente sein, oder auch bereits bestehende Schichten, welche ihrerseits auf einem Auflageelement oder eine Schicht gedruckt wurden. Weiterhin können Schichten aus einem gedruckten Material oder verschiedenen gedruckten Materialien bestehen.

Die Bezeichnung "Pfad" umfasst im Zusammenhang mit dieser Erfindung ein aus einem kontinuierlich gedruckten Materialstrang bestehendes Element, d.h. eine Einheit, welche ohne Absetzen eines Druckkopfes und ohne Unterbrechung des Materialflusses auf ein Auflageelement bzw. einen bereits gedruckte Schicht gelegt wird. Je nach Formgebung kann ein Element, wie beispielsweise ein Trägerelement oder ein expandierbares Element, aus nur einem Pfad bestehen. Insbesondere kann ein einziger Pfad auch mehrere übereinanderliegende Schichten bilden.

Das erste Material zur Bildung des Trägerelmenetes kann verschiedene Materialien umfassen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern, Mineralfasern, pflanzliche Fasern, Textilfasern oder Karbonfasern, sind möglich.

Das Drucken dieses ersten Materiales wird vorzugsweise in einer Schmelzschichtung ("fused deposition modeling") durchgeführt. In einer bevorzugten Variante werden Pellets des ersten Materiales zur Bildung der druckbaren Masse eingeschmolzen.

Als zweites Material zur Bildung des expandierbaren Elementes kann grundsätzlich verschiedenartiges Material eingesetzt werden, welches thermisch zur Schäumung gebracht werden kann. Dieses Material kann dabei Verstärkungseigenschaften aufweisen oder auch nicht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200 °C, insbesondere von 120 °C bis 190 °C, bevorzugt von 160 °C bis 180 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Flüssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben.

Weiterhin geeignete expandierbare Materialien werden unter den Handelsnamen SikaBaffle®-450, SikaBaffle®-420, SikaBaffle®-250NT, SikaBaffle®-255 und SikaBaffle®-250PB2 von der Sika vertrieben. Solche expandierbare Materialien haben eine Expansionsrate von ungefähr 300 - 3000 % und sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer® 941 von der Sika Corp., USA, vertrieben werden. Diese sind beschrieben in US 6,387,470.

In einer beispielhaften Ausführungsform haben die gedruckten Materialstränge des ersten Materials und/oder des zweiten Materials einen rundlichen Querschnitt mit einem Durchmesser von zwischen 1 mm und 6 mm, besonders bevorzugt zwischen 3 mm und 5 mm. "Rundlich" bedeutet in diesem Zusammenhang, dass die Materialstränge beim Drucken zunächst einen im Wesentlichen runden Querschnitt aufweist. Dieser Querschnitt kann sich unmittelbar nach einem Austritt aus einem Druckkopf noch verändern durch die Einwirkung der Schwerkraft.

In einer alternativen Ausführungsform haben die gedruckten Materialstränge des ersten Materials und/oder des zweiten Materials einen Querschnitt mit einer Höhe zwischen 1 mm und 6 mm, besonders bevorzugt von 1 mm bis 3 mm, und einer Breite zwischen 2 mm bis 30 mm, bevorzugt zwischen 4 mm und 20 mm. Dabei wird die Höhe gemessen senkrecht zur Ebene des Dämmelementes, und die Breite wird gemessen in der Ebene des Dämmelementes und quer zu einer Längsachse der Materialstränge.

Das Vorsehen von derart dimensionierten Materialsträngen hat den Vorteil, dass dadurch Dämmelemente aus wenigen Schichten hergestellt werden können. Dies hat zur Folge, dass der Herstellungsprozess schneller und effizienter gestaltet werden kann.
Es ist dabei möglich, beispielsweise je eine Schicht des ersten Materials zur Bildung des Trägerelementes zu verwenden und eine Schicht des zweiten Materials zur Bildung des expandierbaren Elementes.

Weiterhin sind verschiedene Kombinationen der Schichten aus dem ersten und dem zweiten Material möglich: Beispielsweise können zwei Schichten des ersten Materials mit einer Schicht des zweiten Materials kombiniert werden, oder vier Schichten des zweiten Materials können mit zwei Schichten des ersten Materials kombiniert werden. Je nach Anwendungsbereich und Dimensionierung der einzelnen Materialstränge kann eine Anzahl und Anordnung der Schichten individuell festgelegt werden. Dabei können beispielsweise auch Materialstränge des ersten Materials einen anderen Querschnitt aufweisen als Materialstränge des zweiten Materials.

Weiterhin können beispielsweise Materialstränge des ersten Materials einen rundlichen Querschnitt aufweisen und Materialstränge des zweiten Materials einen länglichen Querschnitt, oder umgekehrt.

An der dicksten Stelle des Dämmelementes sind höchstens zehn Schichten übereinanderliegend angeordnet sind. In einer bevorzugten Ausführungsform sind höchstens acht bzw. höchstens sechs bzw. höchstens vier übereinanderliegende Schichten an der dicksten Stelle des Dämmelementes angeordnet.

In einer beispielhaften Ausführungsform hat das Dämmelement zumindest einen Arm hat, welcher zumindest teilweise von der Ebene des Dämmelementes angewinkelt ist, und welcher aus dem ersten Material oder aus dem zweiten Material oder aus dem ersten und dem zweiten Material gebildet ist.

Das Ausbilden solcher Arme hat erstens den Vorteil, dass dadurch schwer zugängliche Winkel des Strukturelementes mit expandierbarem Material erreicht werden können. Hierzu werden die Arme vorzugsweise nur aus dem zweiten Material oder aus dem ersten und dem zweiten Material ausgebildet.

Zweitens haben solche Arme weiterhin den Vorteil, dass dadurch eine mechanische Stabilität des Dämmelementes erhöht werden kann, indem diese angewinkelten Arme eine Position des Dämmelementes im Strukturelement stabilisieren können. Zudem können durch solche Arme auch Abstützungspunkte oder Haken gebildet werden, welche das Dämmelement am Strukturelement abstützen oder befestigen. Hierzu werden die Arme vorzugsweise aus dem ersten Material ausgebildet.

In einer beispielhaften Ausführungsform bestehen das Trägerelement und/oder das expandierbare Element aus zumindest einem und höchstens zehn kontinuierlichen Pfaden. In einer alternativen Ausführungsform bestehen das Trägerelement und/oder das expandierbare Element aus zumindest einem und höchstens acht bzw. sechs bzw. vier bzw. zwei kontinuierlichen Pfaden.

In einer beispielhaften Ausführungsform ist das Trägerelement aus nur einem kontinuierlichen Pfad hergestellt. In einer beispielhaften Weiterbildung ist auch das expandierbare Element aus nur einem kontinuierlichen Pfad hergestellt.

Das Vorsehen von wenigen Pfaden zur Bildung des Trägerelementes und/oder des expandierbaren Elementes hat den Vorteil, dass dadurch der Herstellungsprozess des Dämmelementes weiterhin effizient und kostenoptimiert gestaltet werden kann. Je öfter ein Drucker neu ansetzen muss zur Bildung eines neuen Pfades, desto länger dauert in der Regel die Herstellung eines gedruckten Elementes.

In einer beispielhaften Ausführungsform umfasst das Dämmelement ein Befestigungselement zur Befestigung des Dämmelementes im Strukturelement. In einer beispielhaften Ausführungsform ist das Befestigungselement als Clip ausgebildet.

In einer beispielhaften Weiterbildung umfasst das Befestigungselement spritzgegossenen Kunststoff und/oder Metall.

Das Ausbilden des Befestigungselementes aus spritzgegossenem Kunststoff und/oder aus Metall hat den Vorteil, dass dadurch Befestigungselemente hergestellt werden können, welche eine feingliedrigere Oberflächenstruktur aufweisen als beispielsweise das gedruckte Trägerelement. Da das Befestigungselement mit entsprechenden Strukturen in der Karosserie zusammenwirkt, ist eine genauere Ausgestaltung mit kleineren Toleranzen wichtig. Um eine solche im Detail genauere Struktur zu erreichen, sind spritzgegossene Kunststoffteile oder aus Metall hergestellte Teile vorteilhaft einsetzbar.

In einer beispielhaften Weiterbildung hat das Befestigungselement eine Basis, welche in der Ebene des Dämmelementes liegt, und welche zwischen zwei übereinanderliegenden Schichten eingeklemmt ist oder nur an einer Schicht anliegt.

Das Vorsehen einer solchen Basis des Befestigungselementes hat den Vorteil, dass dadurch das Befestigungselement auf einfache Art und Weise mit den gedruckten Schichten des Dämmelementes verbunden werden kann. Beispielsweise kann das Befestigungselement nach dem Drucken einer ersten Schicht auf diese erste Schicht gelegt werden, wobei eine zweite darauf gedruckte Schicht die Basis des Befestigungselementes sodann zwischen der ersten Schicht und der zweiten Schicht einklemmt.

In einer beispielhaften Weiterbildung hat das Befestigungselement einen Fortsatz, welcher im Wesentlichen senkrecht zur Basis orientiert ist, und welcher zwischen zwei in der Ebene des Dämmelementes nebeneinanderliegenden Materialsträngen eingeklemmt ist oder welcher nur an einem Materialstrang seitlich anliegt.

Das Vorsehen eines solchen Fortsatzes an der Basis des Befestigungselementes hat den Vorteil, dass dadurch eine weiter verbesserte Anbindung des Befestigungselementes an die Materialstränge bzw. Schichten des Dämmelementes erreicht werden kann. Insbesondere kann dadurch das Befestigungselement sowohl horizontal als auch vertikal zwischen Materialsträngen bzw. Schichten des Dämmelementes eingeklemmt werden. Dabei kann das Befestigungselement nur an Materialstränge bzw. Schichten des Trägerelementes anliegen, nur an Materialstränge bzw. Schichten des expandierbaren Elementes anliegen, oder sowohl an Materialstränge bzw. Schichten des Trägerelementes wie auch an Materialstränge bzw. Schichten des expandierbaren Elementes anliegen. Zudem können Basis und Fortsatz zwischen benachbarten Materialsträngen bzw. Schichten eingeklemmt sein oder aussen auf Materialsträngen bzw. Schichten anliegen. Je nach Anwendungsvariante können hier geeignete Kombinationen gewählt werden.

Zur Lösung der eingangs genannten Aufgabe wird weiterhin ein System mit einem Strukturelement und einem darin angeordneten Dämmelement vorgeschlagen. Das Dämmelement kann insbesondere gemäss den obigen Ausführungen gestaltet sein.

In einer beispielhaften Ausführungsform deckt das Dämmelement vor einer Expansion des expandierbaren Elementes zwischen 20 und 60%, bevorzugt zwischen 20 und 40%, eines Querschnittes des Strukturelementes ab.

Eine derartige Abdeckung des Querschnittes des Strukturelementes durch das Dämmelement hat den Vorteil, dass dadurch eine möglichst hohe Dämmwirkung mit möglichst wenig Materialeinsatz erreicht werden kann. Da durch die hier vorgeschlagene Produktionsmethode des Druckens die verschiedenen Materialen genau dort angeordnet werden können, wo sie ihre Funktion ausüben, kann auf eine unnötig Abdeckung des Querschnittes des Strukturelementes verzichtet werden.

Die eingangs genannte Aufgabe wird weiterhin gelöst durch ein Verfahren zur Herstellung eines Dämmelementes mit einem Trägerelement und einem expandierbaren Element für die Anwendung in einem Strukturelement eines Fahrzeuges. Das Verfahren umfasst die Schritte: Bereitstellen eines Auflageelementes; Drucken von zumindest einem Materialstrang aus einem ersten Material zur Bildung eines Trägerelementes, wobei das erste Material zumindest bis zu einer Temperatur zwischen 120°C und 200°C in einem festen Aggregatzustand ist; Drucken von zumindest einem Materialstrang aus einem zweiten Material zur Bildung eines expandierbaren Elementes, wobei das zweite Material bei einer Temperatur zwischen 120°C und 200°C expandierbar ist; und Entfernen des Dämmelementes vom Auflageelement; wobei die Materialstränge derart gedruckt werden, dass das Dämmelement an einer dicksten Stelle, gemessen senkrecht zu einer Ebene des Dämmelementes, mindestens zwei und höchstens zehn übereinanderliegende Schichten hat.

Der Vorteil eines solchen Verfahrens liegt wiederum darin, dass durch das Vorsehen von möglichst wenigen gedruckten Schichten ein möglichst effizienter Druckvorgang bzw. Herstellungsprozess zur Herstellung des Dämmelementes zur Verfügung gestellt werden kann.

In einer bevorzugten Variante wird nur eine Schicht aus dem ersten Material und nur eine Schicht aus dem zweiten Material gedruckt, so dass das Dämmelement an einer dicksten Stelle nur zwei übereinanderliegende Schichten hat. Dadurch wird die Herstellung von gedruckten Dämmelementen möglichst effizient gestaltet.

In einer beispielhaften Ausführungsform wird das Drucken des expandierbaren Elementes vor dem Drucken des Trägerelementes durchgeführt.

Im Prinzip kann eine Druckreihenfolge der Schichten aus dem ersten Material und der Schichten aus dem zweiten Material frei gewählt werden. Das Drucken des Trägerelementes auf das expandierbare Element hat sich jedoch als besonders vorteilhaft erwiesen.

In einer beispielhaften Ausführungsform deckt das gedruckte Trägerelement in einer Sichtrichtung senkrecht zur Ebene des Dämmelementes zumindest 90% des expandierbaren Elementes ab.

Das möglichst vollständige Abdecken des expandierbaren Elementes durch das Trägerelement hat den Vorteil, dass bei einer Verwendung des Dämmelementes in der Karosserie eines Fahrzeuges eine möglichst gute Stützung des expandierbaren Elementes durch das Trägerelement gewährleistet ist. Somit kann eine Schäumung bzw. Expansion des expandierbaren Materials möglichst gut kontrolliert werden.

In einer beispielhaften Ausführungsform hat das Auflageelement Senkungen und/oder Erhebungen zur Ausbildung von Armen, welche zumindest teilweise von der Ebene des Dämmelementes angewinkelt sind.

Das Ausbilden solcher Arme hat den Vorteil, dass dadurch komplexere dreidimensionale Formgebungen des Dämmelementes ermöglicht werden. Da Hohlräume in Karosserien von Fahrzeugen oftmals komplexe dreidimensionale Formen aufweisen, ist es vorteilhaft, diese komplexen dreidimensionalen Formen möglichst gut durch das Dämmelement nachbilden zu können. Dies ermöglicht eine bessere Dämmung des jeweiligen Hohlraumes.

Die derart gebildeten Arme können entweder nur aus dem ersten Material, nur aus dem zweiten Material oder aus dem ersten und dem zweiten Material gebildet sein. Beispielsweise können solche Arme, welche nur aus dem ersten Material gebildet sind, als dreidimensionale Stabilisatoren zur Stabilisierung einer Position des Dämmelementes in einem Strukturelement verwendet werden. Andererseits können beispielsweise Arme, welche nur aus dem zweiten Material bestehen, verwendet werden, um schwierig zugängliche Winkel eines Hohlraumes vollständig ausschäumen zu können. Arme bestehend aus dem ersten und dem zweiten Material können beispielsweise gebogene Enden des Dämmelementes bilden, welche einer Formgebung des Hohlraumes im Strukturelement entsprechen.

In einer beispielhaften Ausführungsform hat das Auflageelement ein Positionierungselement, und das Verfahren umfasst den Schritt: Anbringen eines Befestigungselementes in dem Positionierungselement und an einem Materialstrang des ersten und/oder zweiten Materials.

In einer bevorzugten Weiterbildung ist das Positionierungselement als Aussparung im Auflageelement ausgebildet. Beispielsweise kann diese Aussparung einem Grundriss, welcher zumindest teilweise einem Grundriss des Befestigungselements entspricht, aufweisen.

Dies hat den Vorteil, dass Befestigungselemente in einer vorgesehenen und reproduzierbaren Position am Dämmelement angebracht werden können.

Das Anbringen des Befestigungselementes an dem Positionierungselement und an einem Materialstrang des ersten und/oder des zweiten Materials kann dabei vor dem Drucken des ersten und des zweiten Materials, zwischendurch, oder nach dem Drucken des ersten und des zweiten Materials geschehen.

In einer beispielhaften Ausführungsform werden beim Entfernen des Dämmelementes vom Auflageelement Ausstosselemente relativ zum Auflageelement bewegt.

In einer beispielhaften Weiterbildung sind diese Ausstosselemente als Stifte ausgebildet, welche durch das Auflageelement hindurch bewegbar ausgestaltet sind.

Das Vorsehen solcher Ausstosselemente hat den Vorteil, dass dadurch das fertig gedruckte Dämmelement auf effiziente und schonende Art vom Auflageelement entfernt werden kann.

In einer bevorzugten Ausführungsform umfasst das Verfahren den weiteren Schritt: Wiederverwenden des Auflageelementes für eine Herstellung eines nächsten Dämmelementes, nachdem ein Dämmelement vom Auflageelement entfernt wurde.

Das Wiederverwenden des Auflageelementes hat den Vorteil, dass dadurch das Herstellungsverfahren hinsichtlich der Produktionszeit und der Produktionskosten weiter optimiert werden kann. Somit muss das Auflageelement nicht für jedes Dämmelement neu gedruckt bzw. anderweitig neu zur Verfügung gestellt werden, was insbesondere bei komplexeren Auflageelementen mit Erhöhungen und/oder Vertiefungen oder Positionierungselementen von Vorteil ist.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellung zur Erläuterung eines beispielhaften Dämmelementes gemäss Stand der Technik;
- Fig. 3a bis 3c: schematische Darstellung eines beispielhaften Dämmelementes in Draufsicht und als Querschnitt;
- Fig. 4a und 4b: schematische Darstellung eines beispielhaften Dämmelementes in Draufsicht und im Querschnitt;
- Fig. 5a bis 7b: schematische Darstellung beispielhaften Trägerelementes, jeweils mit und ohne expandierbarem Element;
- Fig. 8a bis 8c: schematische Darstellung eines im Dämmelement integrierten Befestigungselementes; und
- Fig. 9a bis 9d: schematische Darstellung eines beispielhaften Verfahrens zur Herstellung eines Dämmelementes.

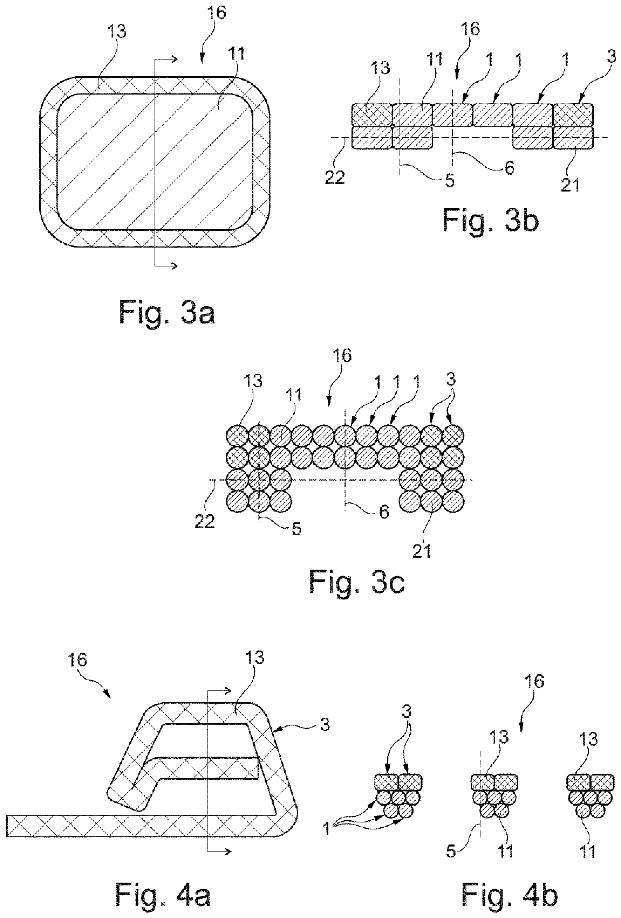

In den Fig. 3a bis 3c ist eine erste Variante eines beispielhaften Dämmelementes 16 dargestellt. Dieses beispielhafte Dämmelement 16 weist dabei eine herkömmliche Formgebung eines Dämmelementes auf, wie dies auch in den Fig. 2a und 2b dargestellt ist. Dabei zeigt die Fig. 3a eine Draufsicht auf das beispielhafte Dämmelement 16, und die Fig. 3b und 3c zeigen jeweils unterschiedliche Varianten eines Querschnittes durch das Dämmelement 16, entlang der in Fig. 3a eingezeichneten Schnittlinie.

Das Dämmelement 16 umfasst ein Trägerelement 11 bestehend aus zumindest einem gedruckten Materialstrang 1 eines ersten Materials und ein expandierbares Element 13 bestehend aus zumindest einem gedruckten Materialstrang 3 eines zweiten Materials. In der Variante gemäss Fig. 3b hat das Dämmelement 16 an einer dicksten Stelle 5, gemessen senkrecht zu einer Ebene 22 des Dämmelementes 16, zwei übereinanderliegende Schichten. In der Variante gemäss Fig. 3c hat das Dämmelement 16 an der dicksten Stelle 5, gemessen senkrecht zu der Ebene 22 des Dämmelementes 16, vier übereinanderliegende Schichten. In diesem Ausführungsbeispiel sind gemäss Fig. 3c jeweils zwei Schichten des zweiten Materials auf jeweils zwei Schichten des ersten Materials gelegt.

Wie aus diesem Ausführungsbeispiel ersichtlich wird, muss nicht zwingenderweise das gesamte Trägerelement 11 mit dem expandierbaren Element 13 überdeckt werden. Es können auch nur Teilbereiche des Trägerelementes 11 mit expandierbarem Element 13 bedeckt werden. Wie hier gezeigt, kann beispielsweise nur ein Randbereich 21 des Trägerelementes 11 mit expandierbarem Material 13 bedeckt sein.

Neben der dicksten Stelle 5, gemessen senkrecht zu der Ebene 22 des Dämmelementes 16, weist das Dämmelement 16 auch eine dünnste Stelle 6 auf, ebenfalls gemessen senkrecht zu der Ebene 22 des Dämmelementes 16. Dabei kann diese dünnste Stelle 6 die gleiche Anzahl an Schichten oder eine andere Anzahl an Schichten als die dickste Stelle 5 aufweisen. Jedoch weist auch die dünnste Stelle 6 höchstens zehn übereinanderliegende Schichten und mindestens eine Schicht auf.

In den Fig. 4a und 4b ist ein weiteres Beispiel eines Dämmelementes 16 dargestellt. Dabei ist in Fig. 4a eine Draufsicht auf das beispielhafte Dämmelement 16 gezeigt, und in Fig. 4b ist ein Querschnitt entlang der in Fig. 4a gezeigten Schnittlinie des Dämmelementes 16 dargestellt. In diesem Ausführungsbeispiel ist das Dämmelement 16 nicht flächig wie herkömmliche Dämmelemente ausgebildet, sondern hat eine skeletthafte Gestalt. Eine derartige Gestaltung des Dämmelementes 16 kann durch das hier vorgeschlagene Druckverfahren zur Herstellung des Dämmelementes 16 auf einfache Art und Weise hergestellt werden. Beispielsweise kann die in Fig. 4a dargestellte Form des Dämmelementes 16 mit nur einem kontinuierlichen Pfad hergestellt werden. Weil ein Druckkopf dabei nie neu ansetzen muss, ist dies eine besonders effiziente Variante zur Herstellung eines Dämmelementes 16.

In diesem Ausführungsbeispiel überdecken sich Trägerelement 11 und expandierbares Element 13 im Wesentlichen gegenseitig. Dabei besteht das expandierbare Element 13 aus einer Schicht, welche auf jeweils zwei übereinanderliegenden Schichten des Trägerelementes 11 angeordnet ist. Somit hat das beispielhafte Dämmelement 16 an einer dicksten Stelle 5 in diesem Ausführungsbeispiel drei übereinanderliegende Schichten, nämlich eine Schicht aus dem zweiten Material auf zwei Schichten aus dem ersten Material.

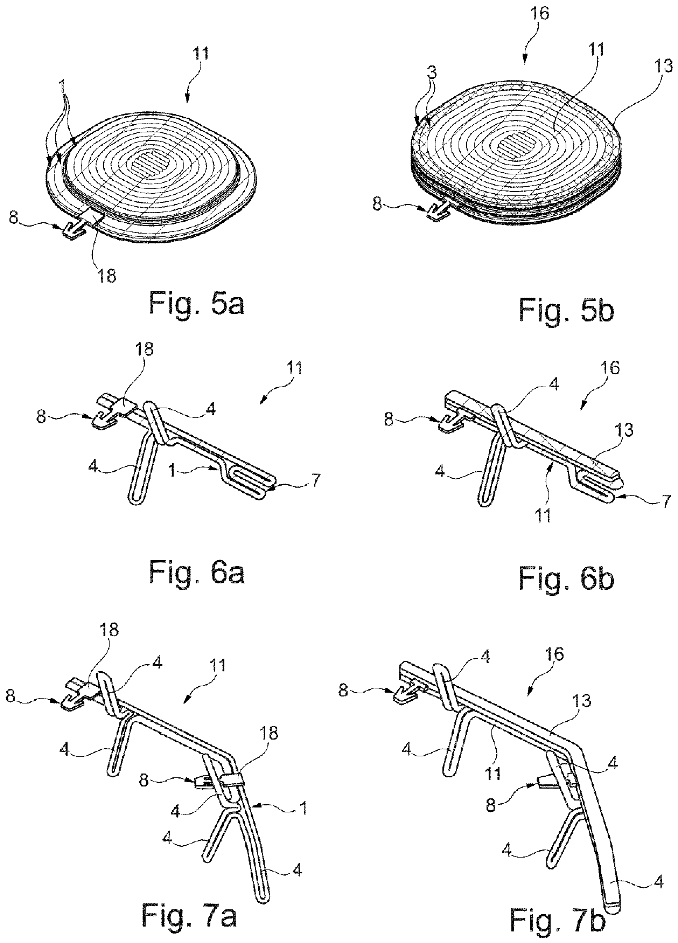

In den Fig. 5a bis 7b sind jeweils weitere Beispiele von Dämmelementen 16 dargestellt, wobei für jedes Ausführungsbeispiel einmal nur das Trägerelement 11 abgebildet ist und einmal das gesamte Dämmelement 16 umfassend Trägerelement 11 und expandierbares Element 13.

In diesen Ausführungsbeispielen ist jeweils ein Befestigungselement 8 am Dämmelement 16 angeordnet. Das Befestigungselement 8 kann beispielsweise als Clip mit einer Basis 18 ausgestaltet sein, wobei die Basis 18 im Wesentlichen in der Ebene des Dämmelementes 16 liegt. Das Befestigungselement 8 kann beispielsweise ein spritzgegossenes Kunststoffteil oder ein gestanztes Metallteil sein. Zur Befestigung am Dämmelement 16 kann das Befestigungselement 8 zwischen übereinanderliegenden Schichten angeordnet sein, oder aber es kann auch einseitig anliegend auf einer unteren oder auf einer oberen Seite des Dämmelementes 16 angeordnet sein (nicht dargestellt).

Das beispielhafte Dämmelement 16 in den Fig. 5a und 5b erstreckt sich nur in einer Ebene. Im Unterschied dazu haben die beispielhaften Dämmelemente gemäss den Ausführungsbeispielen in den Fig. 6a bis 7b zusätzlich Arme 4, welche zumindest teilweise von der Ebene des Dämmelementes 16 angewinkelt ausgebildet sind. Diese Arme 4 dienen beispielsweise als dreidimensionale Stabilisatoren zur Stabilisierung des Dämmelementes 16 im Hohlraum des Strukturelementes, oder wie in Fig. 7b dargestellt, können zusätzlich auch Arme mit expandierbarem Element 4 ausgebildet sein, welche es ermöglichen, schwer zugängliche Räume in einem unregelmässig geformten Strukturelement zu erreichen.

In Fig. 6a und 6b ist zudem ein Haken 7 des Trägerelementes 11 dargestellt, welcher ähnlich wie das Befestigungselement 8 dazu dient, das Dämmelement 16 im Strukturelement in Position zu halten. Daher wird im Ausführungsbeispiel gemäss den Fig. 6a und 6b nur ein Befestigungselement 8 verwendet im Zusammenhang mit dem Haken 7, und im Ausführungsbeispiel gemäss den Fig. 7a und 7b werden zwei Befestigungselemente 8 eingesetzt, jedoch kein Haken 7 des Trägerelementes.

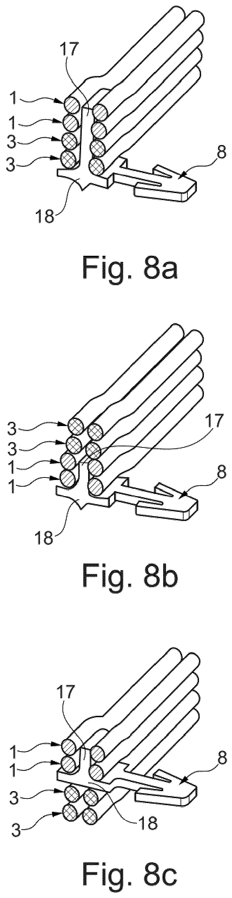

In den Fig. 8a bis 8c sind verschiedene Varianten zur Anbringung des Befestigungselementes 8 im Dämmelement 16 abgebildet. In diesen Ausführungsbeispielen umfasst das Befestigungselement 8 neben der Basis 18 auch einen Fortsatz 17, welcher jeweils senkrecht zur Basis 18 angeordnet ist und mit dieser verbunden ausgestaltet ist. Der Fortsatz 17 wird vorzugsweise von seitlich benachbarten Materialsträngen 1, 3 eingeklemmt, so dass das Befestigungselement 8 in horizontaler Richtung (entspricht einer Richtung in der Ebene des Dämmelementes) im Dämmelement 16 verankert ist. Das Basiselement 18 kann zudem ebenfalls zwischen vertikal benachbarten Materialsträngen 1, 3 bzw. Schichten eingeklemmt sein, wie in Fig. 8C dargestellt, so dass das Befestigungselement 8 auch in vertikaler Richtung (entspricht einer Richtung senkrecht zur Ebene des Dämmelementes) im Dämmelement 16 verankert ist. Alternativ dazu kann die Basis 18 des Befestigungselementes 8 auch aussen anliegend an das Trägerelement 11 (Fig. 8b) oder an das expandierbare Element 13 (Fig. 8a) anliegend angeordnet sein. Je nach Ausgestaltung und Einsatzzweck des Befestigungselementes 8 und des Dämmelementes 16 kann hier eine geeignete Variante gewählt werden.

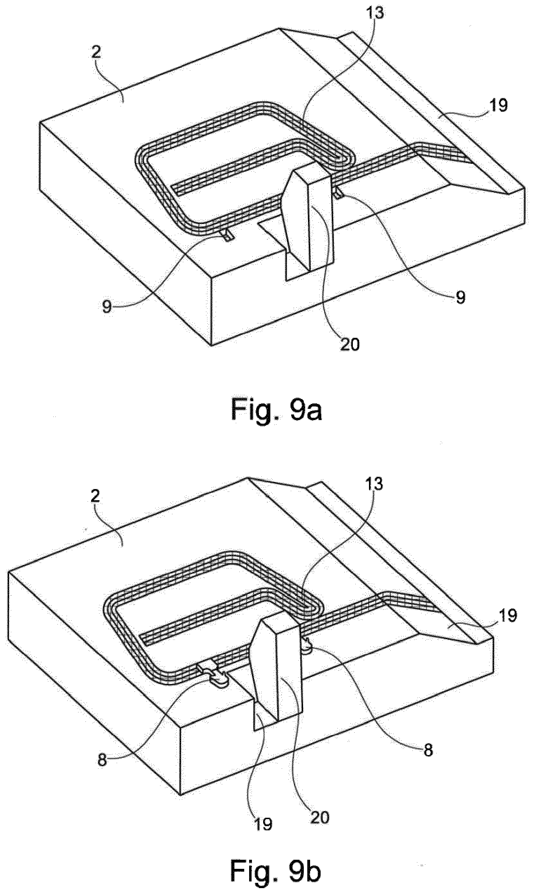

In den Fig. 9a bis 9d ist ein beispielhaftes Verfahren zur Herstellung eines Dämmelementes dargestellt.

In Fig. 9a wird zunächst das Auflageelement 2 bereitgestellt. Dann wird auf dieses Auflageelement 2 zumindest ein Materialstrang des zweiten Materials 13 gedruckt.

In Fig. 9b ist dargestellt, wie Befestigungselemente 8 in Positionierungselemente 9 gelegt werden können, um die Befestigungselemente an der vorgesehenen Position im Dämmelement zu befestigen.

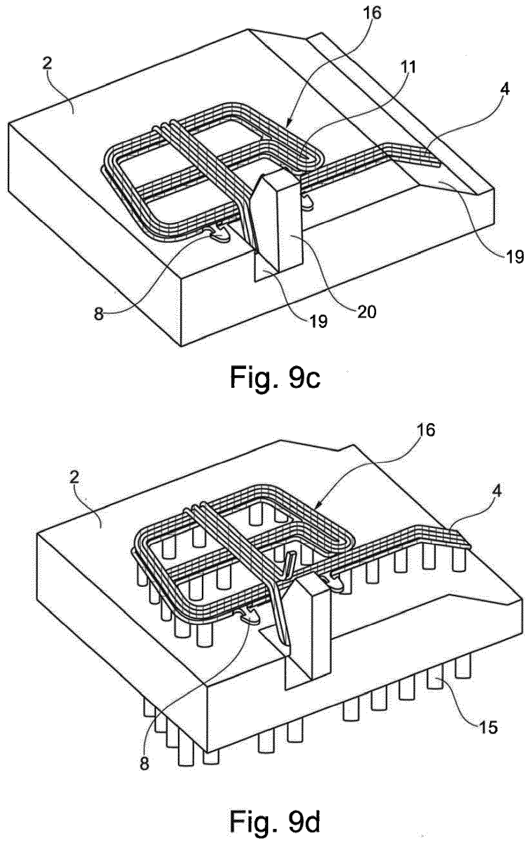

In Fig. 9c wird sodann zumindest ein Materialstrang des ersten Materials auf das zweite Material zur Bildung des Trägerelementes 11 gedruckt. Dabei ist ersichtlich, dass das zweite Material bzw. das Trägerelement 11 das expandierbare Element 13 vollständig überdeckt. Zudem werden die Befestigungselemente 8 zwischen dem expandierbaren Element 13 und dem Trägerelement 11 eingeklemmt.

In Fig. 9d wird das Dämmelement 16 vom Auflageelement 2 entfernt. Dabei werden Ausstosselemente 15 relativ zum Auflageelement 2 bewegt, so dass das Dämmelement 16 aus dem Auflageelement 2 gehoben wird.

In dieser beispielhaften Ausführungsform gemäss den Fig. 9a bis 9d hat das Auflageelement 2 Senkungen 19 und Erhebungen 20. Diese Senkungen 19 und Erhebungen 20 dienen der Ausbildung von Armen 4, welche angewinkelt zur Ebene des Dämmelementes 16 ausgebildet sind. Solche Arme 4 können beispielweise als dreidimensionale Stabilisatoren des Dämmelementes 16 eingesetzt werden, oder aber zur Ausbildung komplexer dreidimensionaler Formgebungen, um komplexere Hohlräume in Strukturelementen möglichst effizient ausfüllen zu können.

Zudem ist aus Fig. 9c ersichtlich, dass Materialstränge desjenigen Materials, welches als zweites Material auf das bereits gedruckte und sich auf dem Auflageelement befindliche Material gedruckt wird, auch direkt auf das Auflageelement 2 gedruckt werden können, und nicht ausschliesslich auf die bereits gedruckte Materialstränge des als erstes gedruckten Materials gedruckt werden müssen. In diesem Ausführungsbeispiel führt dies zur Bildung eines Steges, welcher beispielsweise eine mechanische Stabilität des Trägerelementes 11 erhöht.

## Patentansprüche

1. Dämmelement (16) zur Dämmung eines Strukturelementes (12, 14) in einem Fahrzeug, das Dämmelement (16) umfassend
ein Trägerelement (11) bestehend aus zumindest einem gedruckten Materialstrang (1) eines ersten Materials, wobei das erste Material zumindest bis zu einer Temperatur zwischen 120° C und 200° C in einem festen Aggregatzustand ist,
ein expandierbares Element (13) bestehend aus zumindest einem gedruckten Materialstrang (3) eines zweiten Materials, wobei das zweite Material bei einer Temperatur zwischen 120° C und 200° C expandierbar ist,
wobei das Dämmelement (16) an einer dicksten Stelle (5), gemessen senkrecht zu einer Ebene (22) des Dämmelementes (16), mindestens zwei und höchstens zehn übereinanderliegende Schichten hat.

2. Dämmelement (16) nach Anspruch 1, wobei das Dämmelement (16) zumindest einen Arm (4) hat, welcher zumindest teilweise von der Ebene (22) des Dämmelementes (16) angewinkelt ist, und welcher aus dem ersten Material oder aus dem zweiten Material oder aus dem ersten und dem zweiten Material gebildet ist.

3. Dämmelement (16) nach Anspruch 1 oder 2, wobei die gedruckten Materialstränge (1, 3) des ersten Materials und/oder des zweiten Materials einen rundlichen Querschnitt mit einem Durchmesser zwischen 1 mm und 6 mm haben oder einen Querschnitt mit einer Höhe zwischen 1 mm und 6 mm und einer Breite zwischen 2 mm und 30 mm haben.

4. Dämmelement (16) nach einem der vorhergehenden Ansprüche, wobei das Trägerelement (11) und/oder das expandierbare Element (13) aus zumindest einem und höchstens zehn Pfaden besteht.

5. Dämmelement (16) nach einem der vorhergehenden Ansprüche, wobei das Dämmelement (16) ein Befestigungselement (8) zur Befestigung des Dämmelementes (16) umfasst.

6. Dämmelement (16) nach Anspruch 5, wobei das Befestigungselement (8) spritzgegossenen Kunststoff und/oder Metall aufweist.

7. Dämmelement (16) nach einem der Ansprüche 5 oder 6, wobei das Befestigungselement (8) eine Basis (18) hat, welche in der Ebene (22) des Dämmelementes (16) liegt, und welche zwischen zwei übereinanderliegenden Schichten eingeklemmt ist oder nur an einer Schicht anliegt.

8. Dämmelement (16) nach einem der Ansprüche 5 bis 7, wobei das Befestigungselement (8) einen Fortsatz (17) hat, welcher senkrecht zur Basis (18) ausgebildet ist, und welcher zwischen zwei in der Ebene des Dämmelementes (16) nebeneinanderliegenden Materialsträngen (1, 3) eingeklemmt ist oder welcher nur an einem Materialstrang (1, 3) anliegt.

9. System mit einem Strukturelement (12, 14) und einem darin angeordneten Dämmelement (16) nach einem der Ansprüche 1 bis 8.

10. System nach Anspruch 9, wobei das Dämmelement (16) vor einer Expansion des expandierbaren Elementes (13) zwischen 20% und 60% eines Querschnitts des Strukturelementes (12, 14) abdeckt.

11. Verfahren zur Herstellung eines Dämmelementes (16) mit einem Trägerelement (11) und einem expandierbaren Element (13) für die Anwendung in einem Strukturelement (12, 14) eines Fahrzeuges, das Verfahren umfassend die Schritte:
Bereitstellen eines Auflageelementes (2);
Drucken von zumindest einem Materialstrang (1) aus einem ersten Material zur Bildung eines Trägerelementes (11), wobei das erste Material zumindest bis zu einer Temperatur zwischen 120° C und 200° C in einem festen Aggregatzustand ist;
Drucken von zumindest einem Materialstrang (3) aus einem zweiten Material zur Bildung eines expandierbaren Elementes (13), wobei das zweite Material bei einer Temperatur zwischen 120° C und 200° C expandierbar ist; und
Entfernen des Dämmelementes (16) vom Auflageelement (2);
wobei die Materialstränge (1, 3) derart gedruckt werden, dass das Dämmelement (16) an einer dicksten Stelle, gemessen senkrecht zu einer Ebene (22) des Dämmelementes (16), mindestens zwei und höchstens zehn übereinanderliegende Schichten hat.

12. Verfahren nach Anspruch 11, wobei das Verfahren den weiteren Schritt umfasst: Wiederverwenden des Auflageelementes (2) für eine Herstellung eines nächsten Dämmelementes (16), nachdem ein Dämmelement (16) vom Auflageelement (2) entfernt wurde.

13. Verfahren nach einem der Ansprüche 11 oder 12, wobei das Auflageelement (2) Senkungen (19) und/oder Erhebungen zur Ausbildung von Armen (4) hat, welche zumindest teilweise von der Ebene (22) des Dämmelementes (16) angewinkelt sind.

14. Verfahren nach einem der Ansprüche 11 bis 13, wobei das Auflageelement (2) ein Positionierungselement (9) hat, und wobei das Verfahren den Schritt umfasst:
Anbringen eines Befestigungselementes (8) in dem Positionierungselement (9) und an zumindest eine Schicht des ersten und/oder des zweiten Materials.

15. Verfahren nach einem der Ansprüche 11 bis 14, wobei beim Entfernen des Dämmelementes (16) vom Auflageelement (2) Ausstosselemente (15) relativ zum Auflageelement (2) bewegt werden.

## Claims

1. Dam element (16) for the damming of a structure element (12, 14) within a vehicle, the dam element (16) comprising
a support element (11) consisting of at least one printed strand (1) of a first material, where the first material is in a solid physical state at least up to a temperature of from 120°C to 200°C,
an expandable element (13) consisting of at least one printed strand (3) of a second material, where the second material is expandable at a temperature between 120°C and 200°C,
where the dam element (16) has, at a point (5) of greatest thickness, measured perpendicularly to a plane (22) of the dam element (16), at least two, and at most ten, mutually superposed layers.

2. Dam element (16) according to Claim 1, where the dam element (16) has at least one arm (4) which is at least to some extent at an angle to the plane (22) of the dam element (16), and which is composed of the first material or of the second material or of the first and the second material.

3. Dam element (16) according to Claim 1 or 2, where the printed strands (1, 3) of the first material and/or of the second material have a rounded cross section with diameter from 1 mm to 6 mm, or a cross section with height from 1 mm to 6 mm and width from 2 mm to 30 mm.

4. Dam element (16) according to any of the preceding claims, where the support element (11) and/or the expandable element (13) consist(s) of at least one, and at most ten, trace(s).

5. Dam element (16) according to any of the preceding claims, where the dam element (16) comprises a fastening element (8) for the fastening of the dam element (16).

6. Dam element (16) according to Claim 5, where the fastening element (8) comprises injection-molded plastic and/or comprises metal.

7. Dam element (16) according to either of Claims 5 and 6, where the fastening element (8) has a base (18) which lies within the plane (22) of the dam element (16), and which is cramped between two mutually superposed layers, or is in contact only with one layer.

8. Dam element (16) according to any of Claims 5 to 7, where the fastening element (8) has a projection (17) which is configured perpendicularly to the base (18), and which is cramped between two strands (1, 3) that, within the plane of the dam element (16), are adjacent to one another, or which is in contact only with one strand (1, 3).

9. System with a structure element (12, 14) and with, arranged therein, a dam element (16) according to any of Claims 1 to 8.

10. System according to Claim 9, where, before an expansion of the expandable element (13), the dam element (16) covers from 20% to 60% of a cross section of the structure element (12, 14).

11. Process for the production of a dam element (16) with a support element (11) and with an expandable element (13) for the use within a structure element (12, 14) of a vehicle, the process comprising the steps of:
provision of a bed element (2);
printing of at least one strand (1) made of a first material for the formation of a support element (11), where the first material is in a solid physical state at least up to a temperature of from 120°C to 200°C;
printing of at least one strand (3) made of a second material for the formation of an expandable element (13), where the second material is expandable at a temperature of from 120°C to 200°C; and
removal of the dam element (16) from the bed element (2);
where the strands (1, 3) are printed in a manner such that the dam element (16) has, at a point of greatest thickness, measured perpendicularly to a plane (22) of the dam element (16), at least two, and at most ten, mutually superposed layers.

12. Process according to Claim 11, where the process comprises the further step of: reuse of the bed element (2) for production of a following dam element (16) after a dam element (16) has been removed from the bed element (2).

13. Process according to either of Claims 11 and 12, where the bed element (2) has depressions (19) and/or elevations for the formation of arms (4) which at least to some extent are at an angle to the plane (22) of the dam element (16).

14. Process according to any of Claims 11 to 13, where the bed element (2) has a positioning element (9), and where the process comprises the step of:
attachment of a fastening element (8) within the positioning element (9) and onto at least one layer of the first and/or of the second material.

15. Process according to any of Claims 11 to 14, where during removal of the dam element (16) from the bed element (2) ejector elements (15) are moved in relation to the bed element (2).

## Revendications

1. Élément isolant (16) pour l'isolation d'un élément structural (12, 14) dans un véhicule, l'élément isolant (16) comprenant :
un élément support (11) constitué par au moins un brin de matériau imprimé (1) d'un premier matériau, le premier matériau étant dans un état d'agrégation solide au moins jusqu'à une température comprise entre 120 °C et 200 °C,
un élément expansible (13) constitué par au moins un brin de matériau imprimé (3) d'un deuxième matériau, le deuxième matériau étant expansible à une température comprise entre 120 °C et 200 °C,
l'élément isolant (16) ayant à un emplacement le plus épais (5), mesuré perpendiculairement à un plan (22) de l'élément isolant (16), au moins deux et au plus dix couches superposées.

2. Élément isolant (16) selon la revendication 1, dans lequel l'élément isolant (16) a au moins un bras (4), qui est au moins partiellement incliné à partir du plan (22) de l'élément isolant (16), et qui est formé à partir du premier matériau ou à partir du deuxième matériau ou à partir du premier et du deuxième matériau.

3. Élément isolant (16) selon la revendication 1 ou 2, dans lequel les brins de matériau imprimés (1, 3) du premier matériau et/ou du deuxième matériau ont une section transversale arrondie ayant un diamètre compris entre 1 mm et 6 mm ou une section transversale ayant une hauteur comprise entre 1 mm et 6 mm et une largeur comprise entre 2 mm et 30 mm.

4. Élément isolant (16) selon l'une quelconque des revendications précédentes, dans lequel l'élément support (11) et/ou l'élément expansible (13) sont constitués par au moins une et au plus dix voies.

5. Élément isolant (16) selon l'une quelconque des revendications précédentes, dans lequel l'élément isolant (16) comprend un élément de fixation (8) pour la fixation de l'élément isolant (16).

6. Élément isolant (16) selon la revendication 5, dans lequel l'élément de fixation (8) comprend de la matière plastique moulée par injection et/ou du métal.

7. Élément isolant (16) selon l'une quelconque des revendications 5 ou 6, dans lequel l'élément de fixation (8) a une base (18), qui se situe dans le plan (22) de l'élément isolant (16), et qui est bloquée entre deux couches superposées ou repose uniquement sur une couche.

8. Élément isolant (16) selon l'une quelconque des revendications 5 à 7, dans lequel l'élément de fixation (8) a un prolongement (17), qui est formé perpendiculairement à la base (18), et qui est bloqué entre deux brins de matériaux (1, 3) adjacents dans le plan de l'élément isolant (16), ou qui repose uniquement sur un brin de matériau (1, 3).

9. Système comprenant un élément structural (12, 14) et un élément isolant (16) selon l'une quelconque des revendications 1 à 8 agencé dans celui-ci.

10. Système selon la revendication 9, dans lequel l'élément isolant (16) recouvre avant une expansion de l'élément expansible (13) entre 20 % et 60 % d'une section transversale de l'élément structural (12, 14).

11. Procédé de fabrication d'un élément isolant (16) comprenant un élément support (11) et un élément expansible (13) destiné à être utilisé dans un élément structural (12, 14) d'un véhicule, le procédé comprenant les étapes suivantes :
la mise à disposition d'un élément porteur (2) ;
l'impression d'au moins un brin de matériau (1) en un premier matériau pour la formation d'un élément support (11), le premier matériau étant dans un état d'agrégation solide au moins jusqu'à une température comprise entre 120 °C et 200 °C ;
l'impression d'au moins un brin de matériau (3) en un deuxième matériau pour la formation d'un élément expansible (13), le deuxième matériau étant expansible à une température comprise entre 120 °C et 200 °C ; et
le retrait de l'élément isolant (16) de l'élément porteur (2) ;
les brins de matériau (1, 3) étant imprimés de telle sorte que l'élément isolant (16) ait à un emplacement le plus épais, mesuré perpendiculairement à un plan (22) de l'élément isolant (16), au moins deux et au plus dix couches superposées.

12. Procédé selon la revendication 11, dans lequel le procédé comprend l'étape supplémentaire suivante :
la réutilisation de l'élément porteur (2) pour une fabrication d'un élément isolant suivant (16), après qu'un élément isolant (16) ait été retiré de l'élément porteur (2).

13. Procédé selon l'une quelconque des revendications 11 ou 12, dans lequel l'élément porteur (2) a des creux (19) et/ou des protubérances pour la formation de bras (4), qui sont au moins partiellement inclinés à partir du plan (22) de l'élément isolant (16).

14. Procédé selon l'une quelconque des revendications 11 à 13, dans lequel l'élément porteur (2) a un élément de positionnement (9), et dans lequel le procédé comprend l'étape suivante :
la disposition d'un élément de fixation (8) dans l'élément de positionnement (9) et sur au moins une couche du premier et/ou du deuxième matériau.

15. Procédé selon l'une quelconque des revendications 11 à 14, dans lequel, lors du retrait de l'élément isolant (16) de l'élément porteur (2), des éléments d'éjection (15) sont déplacés par rapport à l'élément porteur (2).
